**Europäisches Patentamt**

**European Patent Office**

**Office européen des brevets**

(19)

(11) Veröffentlichungsnummer: **0 169 832**
A2

(12)

# EUROPÄISCHE PATENTANMELDUNG

(21) Anmeldenummer: **85890158.0**

(22) Anmeldetag: **18.07.85**

(51) Int. Cl.⁴: **C 02 F 3/08**

(30) Priorität: **23.07.84 AT 2369/84**

(43) Veröffentlichungstag der Anmeldung:
**29.01.86 Patentblatt 86/5**

(84) Benannte Vertragsstaaten:
**BE CH DE FR GB IT LI LU NL SE**

(71) Anmelder: **Overhoff Gesellschaft m.b.H.**
**Südbahnstrasse 28**
**A-2544 Leobersdorf(AT)**

(72) Erfinder: **Pastorek, Konrad, Ing.**
**Grossmittelstrasse 18**
**A-2601 Sollenau(AT)**

(74) Vertreter: **Köhler-Pavlik, Johann, Dipl.-Ing.**
**Margaretenplatz 5**
**A-1050 Wien(AT)**

(54) **Flüssigkeits-Belüftungsvorrichtung, insbesondere Wasser-Belüftungsvorrichtung.**

(57) Flüssigkeits-Belüftungsvorrichtung, insbesondere Wasser-Belüftungsvorrichtung. Die Vorrichtung besitzt zumindest ein Umsetzbecken 1 in welchem eine Mehrzahl von länglichen Tauchtropfkörpern 6 am Umfang umlaufender Drehkränze 5 befestigt sind. Die Drehachse der Drehkränze 5 ist parallel zur Oberfläche der Flüssigkeit im Umsetzbecken 1 ausgerichtet, sodaß die Tauchtropfkörper 6 auf der einen Seite des Umsetzbeckens 1 ganz auftauchen und auf der anderen Seite ganz eintauchen. Jeder Tauchtropfkörper 6 besteht aus einer Mehrzahl von axial aneinandergereihten Scheiben 11, deren Stege 13 randseitig eine Verbreiterung 14 aufweisen, sodaß zwischen zwei aufeinanderfolgenden Scheiben 11 eine Hohlkammer 15 entsteht. Die Verbreiterung 14 ist an einer Stelle mit einer schlitzförmigen Öffnung 18 versehen, die beim Eintauchen nach unten weist.

Fig.1

EP 0 169 832 A2

Die Erfindung betrifft eine Flüssigkeits-Belüftungsvorrichtung, insbesondere Wasser-Belüftungsvorrichtung, welche zumindest aus einem Umsetzbecken besteht, in welchem eine Mehrzahl von länglichen Tauchtropfkörpern am Umfang umlaufender Drehkränze befestigt sind, deren Drehachse parallel zur Oberfläche der Flüssigkeit im Umsetzbecken ausgerichtet ist, sodaß die Tauchtropfkörper auf der einen Seite des Umsetzbeckens ganz auftauchen und auf der anderen Seite ganz eintauchen, wobei die Tauchtropfkörper mit Öffnungen versehene Hohlräume aufweisen. Hiebei ist vor allem an die Belüftung von verunreinigtem Wasser, z.B. Abwasser, gedacht.

Eine Vorrichtung dieser Art ist durch die DE-OS 26 39 665 bekannt geworden. Als Tauchtropfkörper dienen hiebei langgestreckte Rohre beliebigen Querschnitts, die Durchbrechungen über zwei Drittel des Umfangs in der Weise aufweisen, daß die Durchbrechungen an der Auftauchseite gegen oben und an der Eintauchseite gegen unten gerichtet sind. Zur Vergrößerung der aktiven Oberfläche sind in die Rohre scheibenförmige feste Körper eingesetzt, die eine Ausbildung eines biologischen Rasens ermöglichen.

Aufgabe der Erfindung ist die Schaffung eines verbesserten Tauchtropfkörpers mit erhöhtem Lufteintrag, dessen Baulänge auf einfache Weise variiert werden kann.

Dies wird bei der Vorrichtung der eingangs genannten Art erfindungsgemäß dadurch erreicht, daß jeder Tauchtropfkörper aus einer Mehrzahl von axial aneinandergereihten Scheiben besteht, deren Stege randseitig eine Verbreiterung aufweisen, sodaß zwischen zwei nebeneinanderliegenden Scheiben eine Hohlkammer entsteht, wobei die Verbreiterung an einer Stelle mit einer schlitzförmigen Öffnung versehen ist, die beim Eintauchen nach unten weist.

Vorzugsweise weist die schlitzförmige Öffnung beim Eintauchen im wesentlichen vertikal nach unten, wobei darunter eine Winkelabweichung von der Vertikalen von ± 5° zu verstehen ist.

Die schlitzförmige Öffnung weist vorzugsweise einen Öffnungswinkel von 15 bis 25° auf.

Weitere Merkmale und Einzelheiten der Erfindung werden nachfolgend anhand der Figuren beschrieben. Es zeigen

Fig. 1 einen Querschnitt einer Belüftungsvorrichtung nach den Linien I-I in Fig. 2,

Fig. 2 eine schematische Seitenansicht der Belüftungsvorrichtung nach Fig. 1,

Fig. 3 eine Vorderansicht einer Scheibe für einen Tauchtropfkörper gemäß der Erfindung,

Fig. 4 einen Querschnitt durch die Scheibe nach Fig. 3 entlang den Linien IV-IV,

Fig. 5 bis 7 weitere Querschnittsformen von Scheiben gemäß der Erfindung, und

Fig. 8 eine perspektivische Darstellung der Randzone zweier Scheiben.

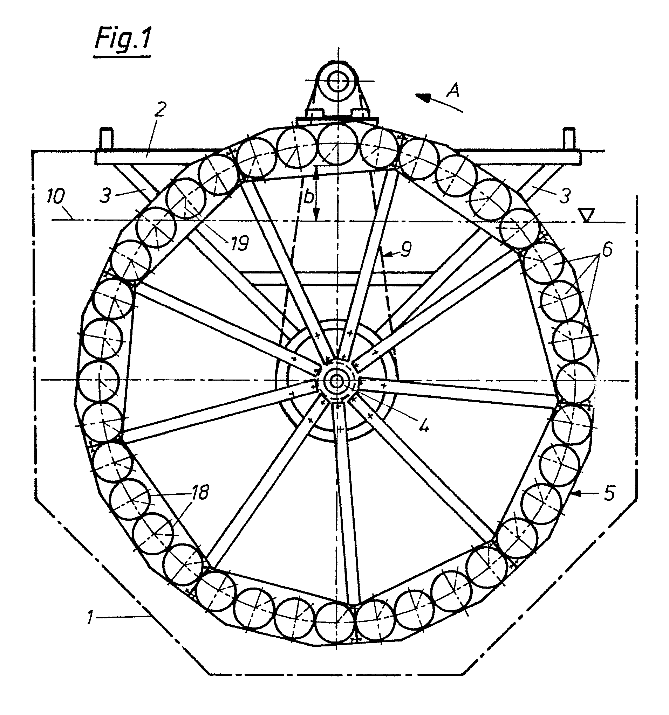

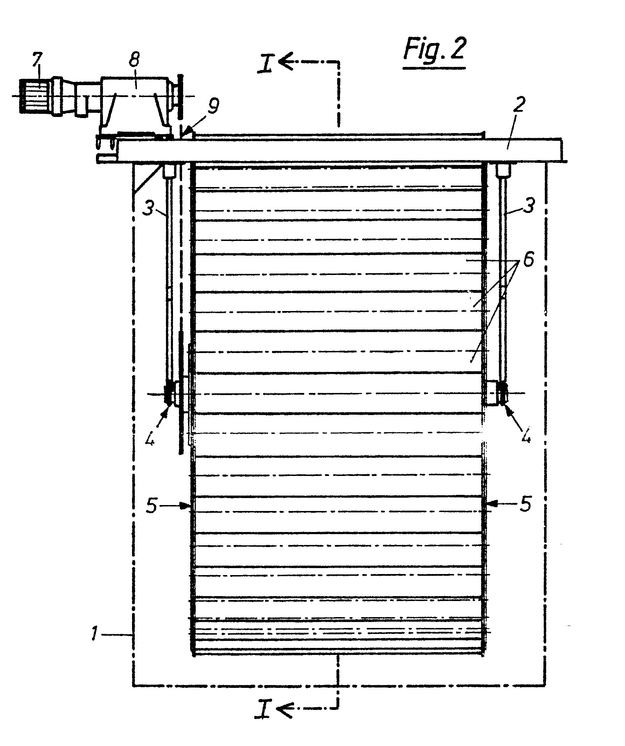

In Fig. 1 und 2 bezeichnet 1 ein Umsetzbecken, welches schematisch mit strichpunktierten Linien dargestellt ist. Ein am Rand des Umsetzbeckens gelagerter Rahmen 2 trägt zwei nach unten ragende V-förmige Verstrebungen 3, die jeweils an ihrem unteren Ende mit einem Drehlager 4 für zwei Drehkränze 5 versehen sind. Am Umfang der Drehkränze 5 sind längliche Tauchtropfkörper 6 angeordnet, die sich zwischen den beiden Drehkränzen 5 erstrecken.

Ein am Rahmen 2 befestigter Antriebsmotor 7 treibt über ein Untersetzungsgetriebe 8 und einen Kettentrieb 9 die Drehkränze 5 an, sodaß die Tauchtropfkörper 6 in Richtung des Pfeiles A im Umsetzbecken 1 umlaufen (Fig. 1) und im oberen Bereich des Umsetzbeckens 1 vollständig aus der Flüssigkeit auftauchen, deren Oberfläche mit 10 bezeichnet ist.

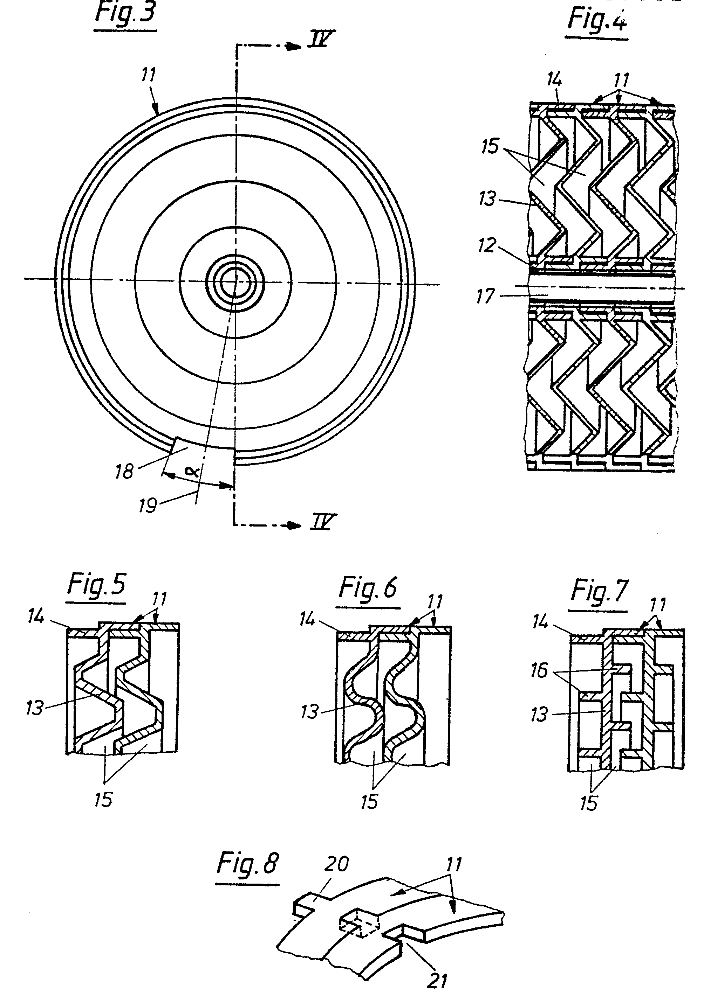

Fig. 3 zeigt die Vorderansicht einer einzelnen Scheibe 11. Mehrere solche Scheiben 11 sind nach Fig. 4 axial aneinandergereiht, um einen Tauchtropfkörper 6 zubilden. Die Scheiben 11 sind hiebei vorzugsweise kreisförmig gestaltet; sie können jedoch jede beliebige andere Umrißform, z.B. Vieleckform, aufweisen. Jede Scheibe 11 ist vorzugsweise von gleicher Form und besteht aus einer Nabe 12 und einem Steg 13, der eine randseitige Verbreiterung 14 aufweist. Sowohl die Nabe 12 als auch die randseitige Verbreiterung 14 sind bei diesem Ausführungsbeispiel stufenförmig abgesetzt, sodaß eine Scheibe auf die andere aufsteckbar ist (ähnlich wie ein Deckel auf eine Dose aufgesteckt wird). Durch die randseitige Verbreiterung 14 werden die Stege 13 voneinander distanziert, sodaß zwischen den Stegen 13 Hohlkammern 15 gebildet werden. Zur Vergrösserung der aktiven Oberfläche der Hohlkammern 15 sind die Stege 13 nach Fig. 4 im Querschnitt zickzackförmig ausgebildet. Weitere Querschnittsformen der Stege 13 zeigen Fig. 5 bis 7. Fig. 5 zeigt eine Mäanderform und Fig. 6 eine Wellenform des Steges 13. In Fig. 7 weist der Steg 13 beiderseits abwechselnd versetzte, koaxiale Querrippen 16 auf.

Die Naben 12 der Scheiben 11 sind auf einer Stange 17 (Fig. 4) aufgefädelt, deren Enden an den Drehkränzen 5 befestigt, z.3. angeschraubt sind.Die randseitige Verbreiterung 14 ist an einer Stelle mit einer

schlitzförmigen Öffnung 18 mit einem Öffnungswinkel $\alpha$ von 15 bis 25° versehen, wobei die Winkelhalbierende des Öffnungswinkels mit 19 bezeichnet ist (Fig. 1 und 3).

Die Scheiben 11 werden derart zusammengesetzt, daß die schlitzförmigen Öffnungen 18 fluchten, wobei die Befestigung der Stange 17 an den Drehkränzen 5 derart erfolgt, daß die schlitzförmigen Öffnungen 18, bzw. deren Winkelhalbierende 19 beim Eintauchen in die Flüssigkeit vertikal nach unten weisen (Fig. 1). Um ein einfaches und genaues Ausrichten der schlitzförmigen Öffnungen 18 beim Zusammensetzen der Scheiben 11 zu ermöglichen, ist beispielsweise an der Randzone jeder Scheibe 11 eine Feder 20 und eine Nut 21 vorgesehen, wie in Fig. 8 dargestellt. Diese Feder-Nutverbindung kann auch an der Nabe 12 der Scheibe 11 vorgesehen werden.

In Fig. 1 bezeichnet b den maximalen Abstand zwischen der Flüssigkeitsoberfläche 10 und dem unteren Rand eines Tauchtropfkörpers. Dieser Abstand b ist so gewählt, daß er das Ein- bis Zweieinhalbfache des Scheibendurchmessers beträgt, sodaß die Drehkränze 5 bezogen auf ihren Außendurchmesser bis zu maximal 86% unter die Flüssigkeitsoberfläche 10 eintauchen.

## Patentansprüche

1. Flüssigkeits-Belüftungsvorrichtung, insbesondere Wasser-Belüftungsvorrichtung, welche zumindest aus einem Umsetzbecken besteht, in welchem eine Mehrzahl von länglichen Tauchtropfkörpern am Umfang umlaufender Drehkränze befestigt sind, deren Drehachse parallel zur Oberfläche der Flüssigkeit im Umsetzbecken ausgerichtet ist, sodaß die Tauchtropfkörper auf der einen Seite des Umsetzbeckens ganz auftauchen und auf der anderen Seite ganz eintauchen, wobei die Tauchtropfkörper mit Öffnungen versehene Hohlräume aufweisen, dadurch gekennzeichnet, daß jeder Tauchtropfkörper (6) aus einer Mehrzahl von axial aneinandergereihten Scheiben (11) besteht, deren Stege (13) randseitig eine Verbreiterung (14) aufweisen, sodaß zwischen zwei nebeneinanderliegenden Scheiben (11) eine Hohlkammer (15) entsteht, wobei die Verbreiterung (14) an einer Stelle mit einer schlitzförmigen Öffnung (18) versehen ist, die beim Eintauchen nach unten weist.

2. Vorrichtung nach Anspruch 1, dadurch gekennzeichnet, daß die schlitzförmige Öffnung (18) beim Eintauchen im wesentlichen vertikal nach unten weist.

3. Vorrichtung nach Anspruch 1, dadurch gekennzeichnet, daß die schlitzförmige Öffnung (18) einen Öffnungswinkel $\alpha$ von 15 bis 25° aufweist.

4. Vorrichtung nach Anspruch 1, dadurch gekennzeichnet, daß der Steg (13) im Querschnitt zickzackförmig ausgebildet ist (Fig. 4).

0169832

5. Vorrichtung nach Anspruch 1, dadurch gekennzeichnet, daß der Steg (13) im Querschnitt mäanderförmig ausgebildet ist (Fig. 5).

6. Vorrichtung nach Anspruch 1, dadurch gekennzeichnet, daß der Steg (13) im Querschnitt wellenförmig ausgebildet ist (FIg. 6).

7. Vorrichtung nach Anspruch 1, dadurch gekennzeichnet, daß der Steg (13) beiderseits abwechselnd versetzte, koaxiale Querrippen (16) aufweist (Fig. 7).

8. Vorrichtung nach Anspruch 1, dadurch gekennzeichnet, daß die randseitige Verbreiterung (14) stufenförmig abgesetzt ist, sodaß eine Scheibe (11) auf die andere aufsteckbar ist (Fig. 4).

9. Vorrichtung nach Anspruch 1, dadurch gekennzeichnet, daß die Nabe (12) stufenförmig abgesetzt ist, sodaß eine Scheibe (11) auf die andere aufsteckbar ist .

10. Vorrichtung nach Anspruch 1, dadurch gekennzeichnet, daß die Randzone der Scheibe (11) auf der einen Seite eine Feder (20) und auf der anderen Seite eine Nut (21) aufweist (Fig. 8).

*Fig.1*

## Fig. 2

0169832

Fig.3

Fig.4

Fig.5

Fig.6

Fig.7

Fig.8